# EUROPEAN PATENT APPLICATION

(11) **EP 4 368 315 A1**
(43) Date of publication of application: **15.05.2024**
(21) Application number: 22837551.5
(22) Date of filing: 29.06.2022
(51) Int. Cl.: B22F 3/00, B22F 3/02, C08K 5/09, C08K 5/10, C08L 59/00

(54) **POLYACETAL RESIN COMPOSITION**

(30) Priority: 06.07.2021 JP 2021112084
(71) Applicant: MITSUBISHI GAS CHEMICAL COMPANY, INC., Chiyoda-ku Tokyo 100-8324 (JP)
(72) Inventor: MICHIBA, Kiyonori, Tokyo 100-8324 (JP); SUNAGA, Daisuke, Tokyo 100-8324 (JP)
(74) Representative: Müller-Boré & Partner Patentanwälte PartG mbB
(86) International application number: PCT/JP2022/025883
(87) International publication number: WO 2023/282135

(57) **Abstract**

The present invention provides a polyacetal resin composition that is used by being kneaded with metal powders, the polyacetal resin composition comprising: 100 parts by weight of a polyacetal resin (A), 0.2 to 10.0 parts by weight of a fatty acid metal salt (B), and 0.2 to 10.0 parts by weight of a fatty acid ester compound (C), wherein the fatty acid metal salt (B) is fatty acid zinc, fatty acid magnesium, or a combination thereof, and the fatty acid ester compound (C) is a compound having 3 or more ester bonds in a single molecule thereof.

## Description

### Technical Field

The present invention relates to a polyacetal resin composition that is used by being kneaded with metal powders. In addition, the present invention relates to: a method for producing a polyacetal resin composition; a metal resin composition comprising a polyacetal resin composition and metal powders; and a method for producing a powder injection molded product, in which a polyacetal resin composition is used as a binder resin composition.

### Background Art

In recent years, a powder injection molding method has been used to produce a metal molded product by injection molding a kneaded body obtained by kneading a binder resin composition and metal powders. The powder injection molding method is excellent in terms of the degree of freedom of the shape and material of a molded product, and dimensional accuracy.

Polyacetal resin has been widely used as an engineering plastic, utilizing its mechanical properties, friction and/or wear properties, chemical resistance, heat resistance, or electrical properties. Since such a polyacetal resin can be easily removed by combustion and the ash residue can be reduced, the polyacetal resin is preferable as a binder resin composition for metal powders in the powder injection molding method.

Patent Literature 1 discloses an invention providing a polyacetal resin composition having excellent extrudability, thermal stability, and suppression of foreign matters, and further, having excellent dispersibility with metal powders, and a metal resin composition comprising metal powders and a polyacetal resin composition, wherein the metal composition has excellent extrudability and thermal stability, has a low foreign matter content, and further, the metal powders are effectively dispersed therein. This polyacetal resin composition comprises (A) 100 parts by mass of a polyacetal resin, (B) 0.005 to 0.2 parts by mass of a nitrogen-containing compound, and (C) 0.01 to 0.8 parts by mass of a fatty acid metal salt, wherein a melt flow index measured under conditions of 190°C and 2.16 kg is 60 g/10 minutes or more and less than 200 g/10 minutes, and the ratio of the content of (C) the fatty acid metal salt to the content of (B) the nitrogen-containing compound, ((C)/(B)), is 1 to 15.

### Citation List

### Patent Literature

Patent Literature 1: JP Patent Publication (Kokai) No. 2020-041133 A

### Summary of Invention

### Technical Problem

When a polyacetal resin composition is used by being kneaded with metal powders (specifically, when a polyacetal resin composition is used as a binder for metal powders), the obtained kneaded body (metal resin composition) is required to have two properties, namely, excellent bending strain and fluidity.

Under such circumstances, it is an object of the present invention to provide a polyacetal resin composition that is used by being kneaded with metal powders. Moreover, the present invention provides: a method for producing a polyacetal resin composition; a metal resin composition comprising a polyacetal resin composition and metal powders; and a method for producing a powder injection molded product, in which a polyacetal resin composition is used as a binder resin composition.

### Solution to Problem

The present invention includes the following aspects [1] to [9].
[1] A polyacetal resin composition that is used by being kneaded with metal powders,
   the polyacetal resin composition comprising:
   100 parts by weight of a polyacetal resin (A),
   0.2 to 10.0 parts by weight of a fatty acid metal salt (B), and
   0.2 to 10.0 parts by weight of a fatty acid ester compound (C), wherein
   the fatty acid metal salt (B) is fatty acid zinc, fatty acid magnesium, or a combination thereof, and
   the fatty acid ester compound (C) is a compound having 3 or more ester bonds in a single molecule thereof.
[2] The polyacetal resin composition according to the above [1], wherein the fatty acid of the fatty acid metal salt (B) is a fatty acid having 12 to 28 carbon atoms.
[3] The polyacetal resin composition according to the above [1] or [2], wherein the fatty acid metal salt (B) is at least one selected from the group consisting of magnesium laurate, zinc laurate, magnesium stearate, zinc stearate, magnesium behenate, zinc behenate, magnesium montanate, and zinc montanate.
[4] The polyacetal resin composition according to any one of the above [1] to [3], wherein the fatty acid of the fatty acid ester compound (C) is a fatty acid having 12 to 28 carbon atoms.
[5] The polyacetal resin composition according to any one of the above [1] to [4], wherein the fatty acid ester compound (C) is pentaerythritol tetrastearate, sorbitan tristearate, sorbitan tribehenate, or a combination thereof.
[6] The polyacetal resin composition according to any one of the above [1] to [5], wherein the melt index of the polyacetal resin (A) is 40 to 100 g/10 minutes (2.16 kg, 190°C).
[7] A metal resin composition, comprising:
   the polyacetal resin composition according to any one of the above [1] to [6], and
   a metal powder (D).
[8] A method for producing a polyacetal resin composition that is used by being kneaded with metal powders, comprising:
   a step of melt-kneading 100 parts by weight of a polyacetal resin (A), 0.2 to 10.0 parts by weight of a fatty acid metal salt (B), and 0.2 to 10.0 parts by weight of a fatty acid ester compound (C), wherein
   the fatty acid metal salt (B) is fatty acid zinc, fatty acid magnesium, or a combination thereof, and
   the fatty acid ester compound (C) is a compound having 3 or more ester bonds in a single molecule thereof.
[9] A method for producing a powder injection molded product, comprising a step of injecting a kneaded body obtained by melt-kneading metal powders and a binder resin composition into a mold, wherein
   the binder resin composition is the polyacetal resin composition according to any one of the above [1] to [6].

### Advantageous Effects of Invention

By kneading the polyacetal resin composition of the present invention with metal powders and then using it, the obtained kneaded body (metal resin composition) has two properties, namely, excellent bending strain and fluidity. In particular, the metal resin composition is suitable as a raw material, when a small and/or complicated product is produced according to a powder injection molding method.

### Description of Embodiments

### [Polyacetal resin composition]

The polyacetal resin composition of the present invention comprises 100 parts by weight of a polyacetal resin (A), 0.2 to 10.0 parts by weight of a fatty acid metal salt (B), and 0.2 to 10.0 parts by weight of a fatty acid ester compound (C). The fatty acid metal salt (B) is fatty acid zinc, fatty acid magnesium, or a combination thereof, whereas the fatty acid ester compound (C) is a compound having 3 or more ester bonds in a single molecule thereof.

The polyacetal resin composition of the present invention is used by being kneaded with a metal powder (D), and the present polyacetal resin composition is a binder resin composition for the metal powder (D). The present polyacetal resin composition may be a solid, a powder, a strand, a pellet, or a combination thereof. The polyacetal resin composition of the present invention is used by being kneaded with the metal powder (D), and the obtained kneaded body (metal resin composition) has two properties, namely, excellent bending strain and fluidity.

It is considered that the fatty acid metal salt (B) comprised in the polyacetal resin composition of the present invention mainly improves interfacial stability, even further, adhesiveness between the polyacetal resin (A) and the metal powder (D), and suppresses the peeling of the interface due to external stresses such as tension and bending, so as to improve the bending strain of a metal resin composition.

Since the fatty acid ester compound (C) having 3 or more ester bonds in a single molecule thereof generally has a three-dimensional molecular shape, the fatty acid ester compound (C) has a large molecular volume, compared with a fatty acid ester compound having 2 or less ester bonds in a single molecule thereof. Accordingly, it is considered that the fatty acid ester compound (C) is mainly located between the metal powders (D) in a metal resin composition, so that the fatty acid ester compound (C) suppresses collision and friction between the metal powders, and further improves the fluidity of the metal resin composition. Hence, into the polyacetal resin composition that provides a metal resin composition having two properties, namely, excellent bending strain and fluidity, the fatty acid metal salt (B) and the fatty acid ester compound (C) having 3 or more ester bonds in a single molecule thereof are mixed, in each amount of 0.2 to 10.0 parts by weight, with respect to 100 parts by weight of the polyacetal resin (A).

The method for producing a polyacetal resin composition of the present invention comprises a step of melt-kneading 100 parts by weight of a polyacetal resin (A), 0.2 to 10.0 parts by weight of a fatty acid metal salt (B), and 0.2 to 10.0 parts by weight of a fatty acid ester compound (C). The fatty acid metal salt (B) is fatty acid zinc, fatty acid magnesium, or a combination thereof, whereas the fatty acid ester compound (C) is a compound having 3 or more ester bonds in a single molecule thereof. The melt-kneading step is carried out at a temperature at which the polyacetal resin composition is melted, or a higher temperature (in general, at a temperature of 180°C or higher) (under atmospheric condition).

### [Polyacetal resin (A)]

The polyacetal resin (A) is a polymer having an acetal bond: - O-CRH- (wherein R represents a hydrogen atom or an organic group) as a repeating unit, and in general, the polyacetal resin (A) has an oxymethylene group (-OCH₂-) as a main constituent unit, wherein the above R is a hydrogen atom. The polyacetal resin (A) may be a copolymer (block copolymer) or a terpolymer, comprising one or more types of repeating constituent units other than the oxymethylene group. Moreover, the polyacetal resin (A) may not only have a linear structure, but may also have a branched or cross-linked structure that is generated by using a glycidyl ether compound, an epoxy compound, an allyl ether compound, or the like, as a comonomer and/or a termonomer. Examples of the constituent unit other than the oxymethylene group may include optionally branched oxyalkylene groups containing 2 or more and 10 or less carbon atoms, such as oxyethylene groups (-OCH₂CH₂- or -OCH(CH₃)-), oxypropylene groups (-OCH₂CH₂CH₂-, -OCH(CH₃)CH₂-, or - OCH₂CH(CH₃)-), and oxybutylene groups (-OCH₂CH₂CH₂CH₂-, - OCH(CH₃)CH₂CH₂-, -OCH₂CH(CH₃)CH₂-, -OCH₂CH₂CH(CH₃)-, - OCH(C₂H₅)CH₂-, or -OCH₂CH(C₂H₅)-). Among these groups, an optionally branched oxyalkylene group containing 2 or more and 4 or less carbon atoms, or an oxyethylene group (-OCH₂CH₂-) is preferable. Furthermore, the content of comonomers (i.e. constituent units other than the oxymethylene group) in the polyacetal resin (A) is 0.1% by weight to 20% by weight, 0.5% to 20% by weight, 1.0% to 20% by weight, 2.0% to 20% by weight, 4.0% to 20% by weight, 1.0% to 15% by weight, 1.0% to 10% by weight, 1.0% to 15% by weight, 1.0% to 10% by weight, 2.0% to 15% by weight, 2.0% to 10% by weight, 2.0% to 8.0% by weight, 4.0% to 10% by weight, or 4.0% to 8.0% by weight, based on the weight of the polyacetal resin (A).

The polyacetal resin (A) may be either a polyacetal resin after end stabilization, or a polyacetal resin before end stabilization. That is to say, the polyacetal resin (A) after end stabilization, the fatty acid metal salt (B), and the fatty acid ester compound (C) may be melt-kneaded, so as to prepare a polyacetal resin composition. Otherwise, the polyacetal resin (A) before end stabilization, the fatty acid metal salt (B), and the fatty acid ester compound (C) may be melt-kneaded, so as to prepare a polyacetal resin composition.

Preferably, the polyacetal resin (A) is a copolymer of a cyclic acetal such as trioxane or tetraoxane, and ethylene oxide or 1,3-dioxolane. For example, the polyacetal resin (A) is an acetal copolymer, in which 1,3-dioxolane is used as a comonomer.

The polyacetal resin (A) has a melt flow rate as measured in accordance with ASTM-D1238 (conditions: 190°C and a load of 2.16 kg) that is 1 to 100 g/10 minutes, 10 to 100 g/10 minutes, 15 to 100 g/10 minutes, 20 to 100 g/10 minutes, 25 to 100 g/10 minutes, 30 to 100 g/10 minutes, 35 to 100 g/10 minutes, 40 to 100 g/10 minutes, 45 to 100 g/10 minutes, or 45 to 95 g/10 minutes. Preferably, the polyacetal resin (A) has a melt flow rate of 30 to 100 g/10 minutes, 40 to 100 g/10 minutes, or 45 to 95 g/10 minutes.

The method for producing a polyacetal resin (A) is not particularly limited, and the polyacetal resin (A) is produced according to a known method. For example, a polyacetal resin (A) comprising, as constituent units, an oxymethylene group and an oxyalkylene group containing 2 to 4 carbon atoms is produced by copolymerizing a cyclic acetal comprising an oxymethylene group, such as formaldehyde trimer (trioxane) or tetramer (tetraoxane), with a cyclic acetal comprising an oxyalkylene group containing 2 to 5 carbon atoms, such as ethylene oxide, 1,3-dioxolane, 1,3,6-trioxocane, or 1,3-dioxepane.

For example, the polyacetal resin (A) can be obtained by a method of subjecting a cyclic acetal of an oxymethylene group and a cyclic acetal comprising an oxyalkylene group containing 2 to 5 carbon atoms as a comonomer to bulk polymerization using a polymerization catalyst. A polymerization catalyst, and also, for inactivation of the polymerization growth end, a reaction terminator may be used, as necessary. In addition, in order to regulate the molecular weight of the polyacetal resin (A), a molecular weight regulator may be used, as necessary.

The types and amounts of such a polymerization catalyst, a reaction terminator, and a molecular weight regulator are not limited, as long as the effects of the present invention are not inhibited thereby. Thus, a known polymerization catalyst, reaction terminator, and molecular weight regulator may be used, as appropriate.

Examples of the polymerization catalyst may include: Lewis acids such as boron trifluoride, tin tetrachloride, titanium tetrachloride, phosphorus pentachloride, phosphorus pentafluoride, arsenic pentafluoride and antimony pentafluoride, or complex compounds or salt compounds of these Lewis acids; protic acids such as trifluoromethanesulfonic acid or perchloric acid; esters of protic acids, such as an ester of perchloric acid and lower aliphatic alcohol; anhydrides of protic acids, such as a mixed anhydride of perchloric acid and lower aliphatic carboxylic acid; and triethyloxonium hexafluorophosphate, triphenylmethyl hexafluoroarsenate, acetyl hexafluoroborate, heteropoly acid or an acidic salt thereof, isopoly acid or an acidic salt thereof, and perfluoroalkyl sulfonic acid or an acidic salt thereof.

Examples of the reaction terminator may include trivalent organophosphorus compounds, amine compounds, alkali metals, alkaline earth metal hydroxides, and combinations thereof. Examples of the molecular weight regulator may include methylal, methoxymethylal, dimethoxymethylal, trimethoxymethylal, and oxymethylene di-n-butyl ether.

Further, known additives such as antioxidants, heat stabilizers, coloring agents, nucleating agents, plasticizers, fluorescent brighteners, sliding agents, antistatic agents, ultraviolet absorbers, or light stabilizers may be added to the polyacetal resin (A), as necessary.

### [Fatty acid metal salt (B)]

The fatty acid metal salt (B) is fatty acid zinc, fatty acid magnesium, or a combination thereof. The fatty acid metal salt (B) is a salt of a fatty acid containing 12 to 28 carbon atoms with zinc or magnesium. Examples of the fatty acid containing 12 to 28 carbon atoms may include lauric acid, palmitic acid, stearic acid, behenic acid, montanic acid, 12-hydroxystearic acid, oleic acid, and erucic acid. Preferably, the fatty acid zinc is zinc stearate, zinc laurate, zinc behenate or zinc montanate, and the fatty acid magnesium is magnesium laurate, magnesium stearate, magnesium behenate, or magnesium montanate.

The content of the fatty acid metal salt (B) in the polyacetal resin composition is 0.2 to 10.0 parts by weight, with respect to 100 parts by weight of the polyacetal resin (A). Besides, the content of the fatty acid metal salt (B) in the polyacetal resin composition may also be 0.3 to 10.0 parts by weight, 0.5 to 10.0 parts by weight, 1.0 to 10.0 parts by weight, 3.0 to 10.0 parts by weight, 5.0 to 10.0 parts by weight, 8.0 to 10.0 parts by weight, 0.2 to 8.0 parts by weight, 0.3 to 8.0 parts by weight, 0.5 to 8.0 parts by weight, 1.0 to 8.0 parts by weight, 3.0 to 8.0 parts by weight, 5.0 to 8.0 parts by weight, 6.0 to 8.0 parts by weight, 0.2 to 6.0 parts by weight, 0.3 to 6.0 parts by weight, 0.5 to 6.0 parts by weight, 1.0 to 6.0 parts by weight, 3.0 to 6.0 parts by weight, or 5.0 to 6.0 parts by weight.

### [Fatty acid ester compound (C)]

The fatty acid ester compound (C) is a compound having 3 or more ester bonds in a single molecule thereof. The fatty acid ester compound (C) is an ester compound of a fatty acid having 12 to 28 carbon atoms and polyhydric alcohol having 3 or more hydroxyl groups in a single molecule thereof. The fatty acid having 12 to 28 carbon atoms is preferably lauric acid, myristic acid, palmitic acid, stearic acid, arachidic acid, behenic acid, montanic acid, oleic acid, linoleic acid, linolenic acid, ricinoleic acid, or 12-hydroxystearic acid. On the other hand, the polyhydric alcohol having 3 or more hydroxyl groups in a single molecule thereof is preferably erythritol, pentaerythritol , sorbitan, glycerin, diglycerin, triglycerin, sorbitol, arabitol, ribitol, xylitol, sorbitol, or mannitol.

The fatty acid ester compound (C) is more preferably glycerin tripalmitate, glycerin tristearate, glycerin tribehenate, glycerin trimontanate, pentaerythritol tripalmitate, pentaerythritol tetrapalmitate, pentaerythritol tristearate, pentaerythritol tetrastearate, pentaerythritol tribehenate, pentaerythritol tetrabehenate, pentaerythritol trimontanate, pentaerythritol tetramontanate, sorbitan tripalmitate, sorbitan tristearate, sorbitan tribehenate, sorbitan trimontanate, sorbitol tripalmitate, sorbitol tristearate, sorbitol tribehenate, sorbitol trimontanate, sorbitan trioleate, triacylglycerol, dipentaerythritol hexalaurate, dipentaerythritol hexamyristate, dipentaerythritol hexapalmitate, dipentaerythritol hexastearate, dipentaerythritol hexabehenate, or a combination thereof.

The content of the fatty acid ester compound (C) in the polyacetal resin composition is 0.2 to 10.0 parts by weight, with respect to 100 parts by weight of the polyacetal resin (A). Besides, the content of the fatty acid ester compound (C) in the polyacetal resin composition may also be 0.3 to 10.0 parts by weight, 0.5 to 10.0 parts by weight, 1.0 to 10.0 parts by weight, 3.0 to 10.0 parts by weight, 5.0 to 10.0 parts by weight, 8.0 to 10.0 parts by weight, 0.2 to 8.0 parts by weight, 0.3 to 8.0 parts by weight, 0.5 to 8.0 parts by weight, 1.0 to 8.0 parts by weight, 3.0 to 8.0 parts by weight, 5.0 to 8.0 parts by weight, 6.0 to 8.0 parts by weight, 0.2 to 6.0 parts by weight, 0.3 to 6.0 parts by weight, 0.5 to 6.0 parts by weight, 1.0 to 6.0 parts by weight, 3.0 to 6.0 parts by weight, or 5.0 to 6.0 parts by weight.

### [Method for producing polyacetal resin composition]

The method for producing a polyacetal resin composition of the present invention comprises a step of melt-kneading a polyacetal resin (A), a fatty acid metal salt (B) and a fatty acid ester compound (C) (melt-kneading step). The melt-kneading can be carried out using, for example, a Banbury mixer, a roll, a plapender, a single screw extruder or a twin screw extruder, or a kneader.

Conditions applied in the melt-kneading step, such as a temperature and a pressure, may be selected, as appropriate, while taking into consideration conventionally known methods for producing a polyacetal resin composition. For instance, the melt-kneading step may be carried out at a temperature that is equal to or higher than the melting temperature of a polyacetal resin. In general, the melt-kneading step is carried out at a temperature of preferably 180°C to 240°C, more preferably 200°C to 220°C.

The polyacetal resin (A), the fatty acid metal salt (B) and the fatty acid ester compound (C) may be melt-kneaded at once to prepare a polyacetal resin composition, or the fatty acid metal salt (B) and the fatty acid ester compound (C) may be added, separately, to the polyacetal resin (A) in a single melt-kneading step, so that the aforementioned contents of the fatty acid metal salt (B) and the fatty acid ester compound (C) can be finally obtained. Otherwise, a polyacetal resin composition comprising the fatty acid metal salt (B) and the fatty acid ester compound (C) in high concentrations may be once prepared, and then, the prepared polyacetal resin composition may be further kneaded with another polyacetal resin (A) for dilution, so that a polyacetal resin composition may be prepared.

### [Metal resin composition]

The metal resin composition of the present invention comprises the above-described polyacetal resin composition and the metal powder (D). The metal resin composition is produced by melt-kneading the above-described polyacetal resin composition and the metal powder (D). The melt-kneading step is carried out at a temperature that is equal to or higher than the melting temperature of the polyacetal resin composition (in general, at a temperature of 180°C or higher). The metal resin composition (kneaded body) may be in a solid, powder, strand, or pellet form.

The metal resin composition has an excellent fluidity of 20 g/10 minutes or more, which is measured in accordance with ASTM-D1238, at a temperature of 190°C and at a load of 10 kg. Moreover, the metal resin composition has a fluidity of 20 to 10000 g/10 minutes, 20 to 9000 g/10 minutes, 20 to 8000 g/10 minutes, 20 to 7000 g/10 minutes, 20 to 6000 g/10 minutes, 20 to 5000 g/10 minutes, 20 to 4000 g/10 minutes, 20 to 3000 g/10 minutes, 20 to 2800 g/10 minutes, 20 to 2600 g/10 minutes, 150 to 10000 g/10 minutes, 150 to 9000 g/10 minutes, 150 to 8000 g/10 minutes, 150 to 7000 g/10 minutes, 150 to 6000 g/10 minutes, 150 to 5000 g/10 minutes, 150 to 4000 g/10 minutes, 150 to 3000 g/10 minutes, 150 to 2800 g/10 minutes, 150 to 2600 g/10 minutes, 300 to 10000 g/10 minutes, 300 to 9000 g/10 minutes, 300 to 8000 g/10 minutes, 300 to 7000 g/10 minutes, 300 to 6000 g/10 minutes, 300 to 5000 g/10 minutes, 300 to 4000 g/10 minutes, 300 to 3000 g/10 minutes, 300 to 2800 g/10 minutes, or 300 to 2600 g/10 minutes, wherein the fluidity is measured in accordance with ASTM-D1238, at a temperature of 190°C and at a load of 10 kg.

Furthermore, the metal resin composition has excellent bending strain, as well as excellent fluidity. The bending strain (%) is measured as a point of maximum bending strength of a metal resin composition by performing a three-point bending test on a molded piece of the metal resin composition at a bending speed of 2 mm/min, using an apparatus such as, for example, "Autograph (registered trademark) AGS-X" manufactured by Shimadzu Corporation. The metal resin composition has a bending strain of 1.0% or more, as well as a fluidity of 20 g/10 minutes or more. In addition, the metal resin composition has a bending strain of 1.0% to 10%, 1.0 to 9.5%, 1.0% to 9.0%, 1.0% to 8.5%, 1.0% to 8.0%, or 1.1% to 7.9%.

### [Metal powder (D)]

The metal of the metal powder (D) is iron, aluminum, magnesium, cobalt, zinc, copper, nickel, titanium, tungsten, or a metal compound or a metal alloy that is based on these metals. Preferably, the metal powder (D) is a stainless steel (SUS) powder, and the stainless steel is austenitic stainless steel (SUS300 series), ferritic and martensitic stainless steel (SUS400 series), or precipitation hardening stainless steel (SUS600 series). The particle diameter (average particle diameter) of the metal powder (D) is not particularly limited, and the particle diameter of the metal powder (D) is 1 to 100 µm, 1 to 50 µm, 1 to 25 µm, or 1 to 10 µm, as measured by electron micrography, laser diffraction/scattering particle size distribution measurement, etc.

The content of the metal powder (D) in the metal resin composition is 60% to 95% by weight, 65% to 95% by weight, 70% to 95% by weight, 80% to 95% by weight, 85% to 95% by weight, or 70% to 90% by weight, based on the weight of the metal resin composition.

### [Method for producing powder injection molded product]

The method for producing a powder injection molded product of the present invention comprises a step of injecting a kneaded body obtained by melt-kneading the metal powder (D) and a binder resin composition into a mold, wherein the binder resin composition is the above-described polyacetal resin composition. Moreover, the present production method may comprise a step of removing the binder resin composition from the molded kneaded body by heating or with the use of gaseous acid, etc., in a degreasing furnace, and a step of subjecting the molded body to a sintering treatment in a sintering furnace to form a powder injection molded product.

### [Optional components]

Other optional additives such as stabilizers, nucleating agents, mold release agents, fillers, pigments, lubricants, plasticizers, ultraviolet absorbers, flame retardants, or flame retardant promoters may be added to the polyacetal resin composition, as needed, to such an extent that the purpose of the present invention is not impaired. Examples of such optional additives may include glass fibers, glass flakes, glass beads, wollastonite, mica, talc, boron nitride, calcium carbonate, kaolin, silicon dioxide, clay, asbestos, silica, diatomaceous earth, graphite, molybdenum disulfide, glass fibers, middle fibers, potassium titanate fibers, polon fibers, carbon fibers, aramid fibers, potassium titanate whisker, carbon black, and pigment.

### Examples

Hereinafter, the present invention will be described in the following examples. The below-mentioned materials were used in Examples and Comparative Examples as described below.

### [Polyacetal resin (A)]

As a polyacetal resin (A-1), the polyacetal resin "Iupital (registered trademark) F40-05" manufactured by Mitsubishi Engineering-Plastics Corporation, was used. The melt flow rate of the polyacetal resin (A-1) is 47 g/10 minutes (as measured in accordance with ASTM-D1238, at a load of 2.16 kg and a temperature of 190°C).

As a polyacetal resin (A-2), the polyacetal resin "Iupital (registered trademark) F50-05" manufactured by Mitsubishi Engineering-Plastics Corporation, was used. The melt flow rate of the polyacetal resin (A-2) is 90 g/10 minutes (as measured in accordance with ASTM-D1238, at a load of 2.16 kg and a temperature of 190°C).

### [Fatty acid metal salt (B)]

Fatty acid metal salt (B-1) is the magnesium stearate "I MAGNESIUM STEARATE" manufactured by NOF CORPORATION.

Fatty acid metal salt (B-2) is the zinc stearate "ZINC STEARATE" manufactured by NOF CORPORATION.

Fatty acid metal salt (B-3) is the zinc laurate "ZS-3" manufactured by NITTO KASEI KOGYO K.K.

Fatty acid metal salt (B-4) is the zinc behenate "ZS-7" manufactured by NITTO KASEI KOGYO K.K.

Fatty acid metal salt (B-5) is the zinc montanate "ZS-8" manufactured by NITTO KASEI KOGYO K.K.

Fatty acid metal salt (B-6) is the calcium stearate "CALCIUM STEARATE" manufactured by NOF CORPORATION.

### [Fatty acid ester compound (C)]

Fatty acid ester compound (C-1) is the pentaerythritol tetrastearate "Unistar H-476" manufactured by NOF CORPORATION.

Fatty acid ester compound (C-2) is the sorbitan tristearate "POEM S-65V" manufactured by RIKEN VITAMIN CO., LTD.

Fatty acid ester compound (C-3) is the sorbitan tribehenate "RIKEMAL B-150" manufactured by RIKEN VITAMIN CO., LTD.

Fatty acid ester compound (C-4) is the pentaerythritol distearate "Unistar H-476D" manufactured by NOF CORPORATION.

Fatty acid ester compound (C-5) is the sorbitan stearate "POEM S-60V" manufactured by RIKEN VITAMIN CO., LTD.

### [Metal powder (D)]

Metal powder (D) is SUS630 Powder (average particle diameter: 10 µm) manufactured by Epson Atmix Corporation.

### [Example 1]

As shown in Table 1, the polyacetal resin composition of Example 1 was prepared by adding 0.2 parts by weight of the magnesium stearate (B-1) and 0.2 parts by weight of the pentaerythritol tetrastearate (C-1) to 100 parts by weight of the polyacetal resin (A-1), and then melt-kneading the obtained mixture in a kneading machine "Laboplast Mill (registered trademark) 4C150" manufactured by Toyo Seiki Seisaku-sho, Ltd., at a preset temperature of 220°C and at a rotation speed of 30 rpm under a nitrogen flow for 20 minutes. Thereafter, 20 g of this polyacetal resin composition (i.e. 10% by weight, based on the weight of the kneaded body) and 180 g of the metal powder (D) (i.e. 90% by weight, based on the weight of the kneaded body) were kneaded in a kneading machine "Laboplast Mill (registered trademark) 4C150" manufactured by Toyo Seiki Seisaku-sho, Ltd., at a preset temperature of 180°C and at a rotation speed of 60 rpm under a nitrogen flow for 40 minutes, and thereafter, the resulting mixture was cooled and solidified, thereby preparing a kneaded body (metal resin composition). This kneaded body was crushed using a grain cutter "GRANCUTTER (registered trademark) SPC-400" manufactured by HARMO Co., Ltd.

### [Examples 2 to 42]

The polyacetal resin (A), the fatty acid metal salt (B), and the fatty acid ester compound (C) were melt-kneaded in the same manner as that of Example 1, while the types and mixed amounts (part by weight) of the polyacetal resin (A), the fatty acid metal salt (B), and the fatty acid ester compound (C) were applied as shown in Tables 1 to 3, so as to prepare the polyacetal resin compositions of Examples 2 to 42.

In the same manner as that of Example 1, in each of Examples 2 to 36, 20 g (10% by weight) of the polyacetal resin composition and 180 g (90% by weight) of the metal powder (D) were kneaded in the above-described kneading machine at a preset temperature of 180°C and at a rotation speed of 60 rpm under a nitrogen flow for 40 minutes, and thereafter, the obtained mixture was cooled and solidified, thereby preparing a kneaded body (metal resin composition). On the other hand, in each of Examples 37 to 42, 60 g (30% by weight) of the polyacetal resin composition and 140 g (70% by weight) of the metal powder (D) were kneaded in the above-described kneading machine at a preset temperature of 180°C and at a rotation speed of 60 rpm under a nitrogen flow for 40 minutes, and thereafter, the obtained mixture was cooled and solidified, thereby preparing a kneaded body (metal resin composition). The kneaded bodies of Examples 2 to 42 were each crushed using the above-described grain cutter.

### [Comparative Examples 1 to 19]

The polyacetal resin compositions of Comparative Examples 1 to 19 were prepared in the same manners as those of the Examples, while the types and mixed amounts (part by weight) of the polyacetal resin (A), the fatty acid metal salt (B), and the fatty acid ester compound (C) were applied as shown in Table 4. In the same manners as those of the Examples, melt-kneading was carried out in a kneading machine "Laboplast Mill (registered trademark) 4C150" manufactured by Toyo Seiki Seisaku-sho, Ltd., at a preset temperature of 220°C and at a rotation speed of 30 rpm under a nitrogen flow for 20 minutes. Moreover, in each of Comparative Examples 1 to 19, 20 g (10% by weight) of the polyacetal resin composition and 180 g (90% by weight) of the metal powder (D) were kneaded in the above-described kneading machine at a preset temperature of 180°C and at a rotation speed of 60 rpm under a nitrogen flow for 40 minutes, and thereafter, the obtained mixture was cooled and solidified, thereby preparing a kneaded body (metal resin composition). The obtained kneaded bodies were crushed using the above-described grain cutter.

The two properties, namely, the bending strain and fluidity of the kneaded bodies (metal resin compositions) of Examples 1 to 42 and Comparative Examples 1 to 19 were evaluated as follows.

### [Measurement methods and evaluation methods]

### (1) Bending strain

A molded piece of 12.7 mm x 63.5 mm x 3.2 mm in thickness was produced from each crushed kneaded body, using a small desktop injection molding machine "HAAKE MiniJet" manufactured by Thermo Fisher Scientific K. K., at a cylinder temperature of 220°C. Using "Autograph (registered trademark) AGS-X" manufactured by Shimadzu Corporation, the molded piece was subjected to a three-point bending test at a bending speed of 2 mm/min, and the point at which the bending strength became maximum was adopted as a bending strain (%). In the present invention, a bending strain (%) value of 1.0(%) or more was determined to be satisfactory, and a molded piece having a bending strain (%) of 1.0(%) or more was evaluated to have an excellent bending strain property.

### (2) Fluidity

The fluidity of the crushed kneaded body was measured using a melt indexer "L241" manufactured by TAKARA INDUSTRY Co., Ltd., in accordance with ASTM-D1238, at a temperature of 190°C and at a load of 10 kg. In the present invention, a fluidity (g/10 minutes) value of 20 (g/10 minutes) or more was determined to be satisfactory, and a molded piece having a fluidity (g/10 minutes) value of 20 (g/10 minutes) or more was evaluated to have an excellent fluidity property.

**[Table 1]**

| | Examples | | | | | | | | | | | |
|---|---|---|---|---|---|---|---|---|---|---|---|---|
| | 1 | 2 | 3 | 4 | 5 | 6 | 7 | 8 | 9 | 10 | 11 | |
| (A-1) Polyacetal resin | 100 | 100 | 100 | 100 | 100 | 100 | 100 | 100 | 100 | 100 | 100 | |
| (A-2) Polyacetal resin | - | - | - | - | - | - | - | - | - | - | - | |
| (B-1) Magnesium stearate | 0.2 | 0.5 | 1.0 | 10.0 | - | - | - | - | - | - | - | |
| (B-2) Zinc stearate | - | - | - | - | 0.2 | 0.5 | 1.0 | 10.0 | - | - | - | |
| (B-3) Zinc laurate | - | - | - | - | - | - | - | - | 0.2 | 1.0 | 10.0 | |
| (B-4) Zinc behenate | - | - | - | - | - | - | - | - | - | - | - | |
| (B-5) Zinc montanate | - | - | - | - | - | - | - | - | - | - | - | |
| (C-1) Pentaerythritol tetrastearate | 0.2 | 0.5 | 1.0 | 10.0 | 0.2 | 0.5 | 1.0 | 10.0 | 0.2 | 1.0 | 10.0 | |
| (C-2) Sorbitan tristearate | - | - | - | - | - | - | - | - | - | - | - | |
| (C-3) Sorbitan tribehenate | - | - | - | - | - | - | - | - | - | - | - | |
| Physical properties of kneaded body (polyacetal resin composition (10 wt%) + metal powders (90 wt%)) | | | | | | | | | | | | |
| Fluidity (g/10 min: 190°C • 10 kg ) | 22 | 180 | 495 | 1468 | 25 | 191 | 501 | 1542 | 20 | 358 | 1,160 | |
| Bending strain (%) | 1.3 | 5.0 | 6.1 | 2.0 | 1.2 | 3.9 | 4.3 | 1.4 | 1.2 | 4.3 | 1.9 | |

| | Examples | | | | | | | | | | | |
|---|---|---|---|---|---|---|---|---|---|---|---|---|
| | 12 | 13 | 14 | 15 | 16 | 17 | 18 | 19 | 20 | 21 | 22 | 23 |
| (A-1) Polyacetal resin | 100 | 100 | 100 | 100 | 100 | 100 | 100 | 100 | 100 | 100 | 100 | 100 |
| (A-2) Polyacetal resin | - | - | - | - | - | - | - | - | - | - | - | - |
| (B-1) Magnesium stearate | - | - | - | - | - | - | 0.2 | 1.0 | 10.0 | 0.2 | 1.0 | 10.0 |
| (B-2) Zinc stearate | - | - | - | - | - | - | - | - | - | - | - | - |
| (B-3) Zinc laurate | - | - | - | - | - | - | - | - | - | - | - | - |
| (B-4) Zinc behenate | 0.2 | 1.0 | 10.0 | - | - | - | - | - | - | - | - | - |
| (B-5) Zinc montanate | - | - | - | 0.2 | 1.0 | 10.0 | - | - | - | - | - | - |
| (C-1) Pentaerythritol tetrastearate | 0.2 | 1.0 | 10.0 | 0.2 | 1.0 | 10.0 | - | - | - | - | - | - |
| (C-2) Sorbitan tristearate | - | - | - | - | - | - | 0.2 | 1.0 | 10.0 | - | - | - |
| (C-3) Sorbitan tribehenate | - | - | - | - | - | - | - | - | - | 0.2 | 1.0 | 10.0 |
| Physical properties of kneaded body (polyacetal resin composition (10 wt%) + metal powders (90 wt%)) | | | | | | | | | | | | |
| Fluidity (g/10 min: 190°C • 10 kg ) | 28 | 618 | 1920 | 30 | 759 | 2310 | 26 | 312 | 887 | 30 | 352 | 986 |
| Bending strain (%) | 1.1 | 1.8 | 1.2 | 1.1 | 2.2 | 1.3 | 1.4 | 5.8 | 1.9 | 1.2 | 5.5 | 2 |

**[Table 2]**

| | Examples | | | | | | | |
|---|---|---|---|---|---|---|---|---|
| | 24 | 25 | 26 | 27 | 28 | 29 | 30 | 31 |
| (A-1) Polyacetal resin | - | - | - | - | - | - | - | - |
| (A-2) Polyacetal resin | 100 | 100 | 100 | 100 | 100 | 100 | 100 | 100 |
| (B-1) Magnesium stearate | 0.2 | 0.5 | 1.0 | 10.0 | - | - | - | - |
| (B-2) Zinc stearate | - | - | - | - | 0.2 | 0.5 | 1.0 | 10.0 |
| (C-1) Pentaerythritol tetrastearate | 0.2 | 0.5 | 1.0 | 10.0 | 0.2 | 0.5 | 1.0 | 10.0 |
| Physical properties of kneaded body (polyacetal resin composition (10 wt%) + metal powders (90 wt%)) | | | | | | | | |
| Fluidity (g/10 min: 190°C • 10 kg) | 21 | 197 | 697 | 2050 | 22 | 210 | 706 | 2520 |
| Bending strain (%) | 1.3 | 2.9 | 3.6 | 2.0 | 1.6 | 4.3 | 4.0 | 1.2 |

| | Examples | | | | | | | |
|---|---|---|---|---|---|---|---|---|
| | 32 | 33 | 34 | 35 | 36 | | | |
| (A-1) Polyacetal resin | 100 | 100 | 100 | 100 | 100 | | | |
| (A-2) Polyacetal resin | - | - | - | - | - | | | |
| (B-1) Magnesium stearate | 0.1 | 0.5 | 5.0 | 0.2 | 0.2 | | | |
| (B-2) Zinc stearate | 0.1 | 0.5 | 5.0 | - | - | | | |
| (C-1) Pentaerythritol tetrastearate | 0.2 | 1.0 | 10.0 | 0.1 | 0.1 | | | |
| (C-2) Sorbitan tristearate | - | - | - | 0.1 | - | | | |
| (C-3) Sorbitan tribehenate | - | - | - | - | 0.1 | | | |
| Physical properties of kneaded body (polyacetal resin composition (10 wt%) + metal powders (90 wt%)) | | | | | | | | |
| Fluidity (g/10 min: 190°C • 10 kg) | 23 | 370 | 1512 | 24 | 26 | | | |
| Bending strain (%) | 1.4 | 5.9 | 4.0 | 1.5 | 1.3 | | | |

**[Table 3]**

| | Examples | | | | | |
|---|---|---|---|---|---|---|
| | 37 | 38 | 39 | 40 | 41 | 42 |
| (A-1) Polyacetal resin | 100 | 100 | 100 | 100 | 100 | 100 |
| (A-2) Polyacetal resin | - | - | - | - | - | - |
| (B-1) Magnesium stearate | 0.2 | 10.0 | - | - | - | - |
| (B-3) Zinc laurate | - | - | 0.2 | 10.0 | - | - |
| (B-4) Zinc behenate | - | - | - | - | 0.2 | 10.0 |
| (C-1) Pentaerythritol tetrastearate | 0.2 | 10.0 | 0.2 | 10.0 | 0.2 | 10.0 |
| Physical properties of kneaded body (polyacetal resin composition (30 wt%) + metal powders (70 wt%)) | | | | | | |
| Fluidity (g/10 min: 190°C • 10 kg ) | 294 | 6530 | 282 | 6244 | 301 | 7800 |
| Bending strain (%) | 7.8 | 7.2 | 7.9 | 7.1 | 7.9 | 7.0 |

**[Table 4]**

| | Comparative Examples | | | | | | | | | |
|---|---|---|---|---|---|---|---|---|---|---|
| | 1 | 2 | 3 | 4 | 5 | 6 | 7 | 8 | 9 | 10 |
| (A-1) Polyacetal resin | 100 | 100 | - | - | 100 | - | - | - | 100 | 100 |
| (A-2) Polyacetal resin | - | - | 100 | 100 | - | 100 | 100 | 100 | - | - |
| (B-1) Magnesium stearate | 0.2 | - | 0.2 | - | - | - | - | - | 0.01 | - |
| (B-2) Zinc stearate | - | 0.2 | - | 0.2 | - | - | - | - | - | 0.01 |
| (B-6) Calcium stearate | - | - | - | - | - | - | - | - | - | - |
| (C-1) Pentaerythritol tetrastearate | - | - | - | - | 0.2 | 0.2 | - | - | 0.2 | 0.2 |
| (C-2) Sorbitan tristearate | - | - | - | - | - | - | 0.2 | - | - | - |
| (C-3) Sorbitan tribehenate | - | - | - | - | - | - | - | 0.2 | - | - |
| (C-4) Pentaerythritol distearate | - | - | - | - | - | - | - | - | - | - |
| (C-5) Sorbitan monostearate | - | - | - | - | - | - | - | - | - | - |
| Physical properties of kneaded body (polyacetal resin composition (10 wt%) + metal powders (90 wt%)) | | | | | | | | | | |
| Fluidity (g/10 min: 190°C • 10 kg) | 14 | 17 | 11 | 13 | 3.5 | 8.2 | 5.5 | 7.9 | 14 | 17 |
| Bending strain (%) | 1.3 | 1.3 | 1.2 | 1.8 | 0.9 | 0.8 | 0.7 | 0.6 | 0.8 | 0.6 |

| | Comparative Examples | | | | | | | | | |
|---|---|---|---|---|---|---|---|---|---|---|
| | 11 | 12 | 13 | 14 | 15 | 16 | 17 | 18 | 19 | |
| (A-1) Polyacetal resin | - | - | 100 | 100 | - | - | - | 100 | 100 | |
| (A-2) Polyacetal resin | 100 | 100 | - | - | 100 | 100 | 100 | - | - | |
| (B-1) Magnesium stearate | 0.01 | - | 0.2 | - | 0.2 | - | - | 0.2 | 0.2 | |
| (B-2) Zinc stearate | - | 0.01 | - | 0.2 | - | 0.2 | - | - | - | |
| (B-6) Calcium stearate | - | - | - | - | - | - | 0.2 | - | - | |
| (C-1) Pentaerythritol tetrastearate | 0.2 | 0.2 | 0.01 | 0.01 | 0.01 | 0.01 | 0.2 | - | - | |
| (C-2) Sorbitan tristearate | - | - | - | - | - | - | - | - | - | |
| (C-3) Sorbitan tribehenate | - | - | - | - | - | - | - | - | - | |
| (C-4) Pentaerythritol distearate | - | - | - | - | - | - | - | 0.2 | - | |
| (C-5) Sorbitan monostearate | - | - | - | - | - | - | - | - | 0.2 | |
| Physical properties of kneaded body (polyacetal resin composition (10 wt%) + metal powders (90 wt%)) | | | | | | | | | | |
| Fluidity (g/10 min: 190°C • 10 kg ) | 18 | 19 | 15 | 17 | 16 | 18 | 15 | 15 | 17 | |
| Bending strain (%) | 0.7 | 0.7 | 1.3 | 1.2 | 1.6 | 1.8 | 1.2 | 1.3 | 1.3 | |

As shown in Tables 1 to 3, the kneaded body (metal resin composition) comprising a polyacetal resin composition and metal powders in each of Examples 1 to 42 had the two properties, namely, a bending strain of 1.0% or more and a fluidity of 20 g/10 minutes or more. On the other hand, as shown in Table 4, the kneaded body (metal resin composition) comprising a polyacetal resin composition and metal powders in each of Comparative Examples 1 to 19 did not have, at least, a fluidity of 20 g/10 minutes or more, and thus, the kneaded body (metal resin composition) in each of Comparative Examples 1 to 19 did not have the two properties, namely, excellent bending strain and fluidity.

## Claims

1. A polyacetal resin composition that is used by being kneaded with metal powders,
the polyacetal resin composition comprising:
100 parts by weight of a polyacetal resin (A),
0.2 to 10.0 parts by weight of a fatty acid metal salt (B), and
0.2 to 10.0 parts by weight of a fatty acid ester compound (C), wherein
the fatty acid metal salt (B) is fatty acid zinc, fatty acid magnesium, or a combination thereof, and
the fatty acid ester compound (C) is a compound having 3 or more ester bonds in a single molecule thereof.

2. The polyacetal resin composition according to claim 1,
wherein a fatty acid of the fatty acid metal salt (B) is a fatty acid having 12 to 28 carbon atoms.

3. The polyacetal resin composition according to claim 1 or 2,
wherein the fatty acid metal salt (B) is at least one selected from the group consisting of magnesium laurate, zinc laurate, magnesium stearate, zinc stearate, magnesium behenate, zinc behenate, magnesium montanate, and zinc montanate.

4. The polyacetal resin composition according to any one of claims 1 to 3, wherein a fatty acid of the fatty acid ester compound (C) is a fatty acid having 12 to 28 carbon atoms.

5. The polyacetal resin composition according to any one of claims 1 to 4, wherein the fatty acid ester compound (C) is pentaerythritol tetrastearate, sorbitan tristearate, sorbitan tribehenate, or a combination thereof.

6. The polyacetal resin composition according to any one of claims 1 to 5, wherein a melt index of the polyacetal resin (A) is 40 to 100 g/10 minutes (2.16 kg, 190°C).

7. A metal resin composition, comprising:
the polyacetal resin composition according to any one of claims 1 to 6, and
a metal powder (D).

8. A method for producing a polyacetal resin composition that is used by being kneaded with metal powders, comprising:
a step of melt-kneading 100 parts by weight of a polyacetal resin (A), 0.2 to 10.0 parts by weight of a fatty acid metal salt (B), and 0.2 to 10.0 parts by weight of a fatty acid ester compound (C), wherein
the fatty acid metal salt (B) is fatty acid zinc, fatty acid magnesium, or a combination thereof, and
the fatty acid ester compound (C) is a compound having 3 or more ester bonds in a single molecule thereof.

9. A method for producing a powder injection molded product, comprising a step of injecting a kneaded body obtained by melt-kneading metal powders and a binder resin composition into a mold, wherein
the binder resin composition is the polyacetal resin composition according to any one of claims 1 to 6.
